# EUROPÄISCHE PATENTSCHRIFT

(11) **EP 2 901 036 B1**
(45) Veröffentlichungstag und Bekanntmachung des Hinweises auf die Patenterteilung: **03.07.2019**
(21) Anmeldenummer: 13752824.6
(22) Anmeldetag: 08.08.2013
(51) Int. Cl.: F16D 55/28, F16D 59/02, F16D 65/00, F16D 65/12

(54) **ELEKTROMAGNETISCH BETÄTIGBARE BREMSANORDNUNG UND ELEKTROMOTOR**
BRAKE ARRANGEMENT WHICH CAN BE ACTUATED ELECTROMAGNETICALLY AND ELECTRIC MOTOR
ENSEMBLE DE FREINAGE À ACTIONNEMENT ÉLECTROMAGNÉTIQUE ET MOTEUR ÉLECTRIQUE

(30) Priorität: 27.09.2012 DE 102012019001
(43) Veröffentlichungstag der Anmeldung: 05.08.2015
(73) Patentinhaber: SEW-EURODRIVE GmbH & Co. KG, 76646 Bruchsal (DE)
(72) Erfinder: GANDYRA, Manuel, 76316 Malsch (DE); ASCHOFF, Stefan, 64297 Darmstadt (DE)
(86) Internationale Anmeldenummer: PCT/EP2013/002377
(87) Internationale Veröffentlichungsnummer: WO 2014/048520

(56) Entgegenhaltungen:
- EP-A1- 0 222 312
- DE-A1-102010 049 747
- DE-C1- 19 622 983
- DE-U1- 8 913 767
- US-A- 5 274 290

## Beschreibung

Die Erfindung betrifft eine elektromagnetisch betätigbare Bremsanordnung und einen Elektromotor.

Es ist allgemein bekannt, dass bei einer elektromagnetisch betätigbaren Bremsanordnung eines Elektromotors eine Ankerscheibe in Richtung auf einen Magnetkörper hin beschleunigt wird.

Aus der DE 196 22 983 C1 ist eine Bremse bekannt, an deren Ankerscheibe ein Dämpfungsblech befestigt ist und somit eine Einheit bildet.

Aus der DE 10 2010 049747 A1 ist ein Bausatz zur Herstellung unterschiedlicher Elektromotoren einer Baureihe von Elektromotoren bekannt.

Aus der US 5 274 290 A ist eine elektromagnetisch betätigbare Bremse bekannt.

Aus der DE 89 13 767 U1 ist eine elektromagnetische Bremse bekannt.

Aus der EP 0 222 312 A1 ist eine Federdruckbremse bekannt.

Der Erfindung liegt daher die Aufgabe zugrunde, eine elektromagnetisch betätigbare Bremsanordnung weiterzubilden, wobei der Umweltschutz beim Betrieb und die Funktionssicherheit zu verbessern ist.

Erfindungsgemäß wird die Aufgabe bei der elektromagnetisch betätigbaren Bremsanordnung nach den in Anspruch 1 und bei dem Elektromotor nach den in Anspruch 15 angegebenen Merkmalen gelöst.

Von Vorteil ist dabei, dass die Geräuschemission verringerbar ist und somit der Umweltschutz verbessert ist. Denn die Umwelt ist mit geringeren Geräuschen beim Betätigen der Bremse belastet. Das Dämpfungsblech liegt auf der Erhebung der Ankerscheibe auf und ist somit radial außerhalb verformbar. Somit ist beim Heranbewegen der Ankerscheibe auf den Magnetkörper zu in diesem radial außerhalb liegenden Bereich eine Berührung des Dämpfungsblechs durch den Magnetkörper ausführbar und somit ein Abdämpfen, also Abbremsen, der Ankerscheibe. Durch die elastische Auflagerung des Dämpfungsblechs an der Ankerscheibe wird das beim Auftreffen erzeugte Geräusch vermindert oder verhindert.

Mittels der Dämpfung ist es ermöglicht, einen Winkelsensor direkt am Magnetkörper anzuordnen, obwohl das Abbremsen der Ankerscheibe eine Körperschallwelle auslöst, die größtenteils auch in axialer Richtung durch den Magnetkörper durchläuft.

Gemäß Anspruch 1 ist an der von der Ankerscheibe abgewandten axialen Seite des Magnetkörpers ein Winkelsensor angeordnet,
wobei der Winkelsensor ein Sensorgehäuse aufweist, das direkt oder über eine Adapterplatte mit dem Magnetkörper verbunden ist, und wobei vom Sensorgehäuse umgeben ein Sensorrotorteil angeordnet ist, das mit der Welle drehfest verbunden ist,
und wobei die Adapterplatte aus einem amagnetischem, diamagnetischen oder paramagnetischem Werkstoff, insbesondere Aluminium oder Kunststoff, gefertigt ist.

Das Material der Adapterplatte weist eine größere Absorption für Körperschall mit einer Frequenz zwischen 1 Hz und 100 kHz auf als das Material des Magnetkörpers. Von Vorteil ist dabei, dass die von der Ankerscheibe bewirkte und von der Dämpfungsscheibe nicht vollständig abgedämpfte Schockwelle durch die Adapterplatte weiter abdämpfbar ist und somit eine Verstärkung der Abdämpfung zum Winkelsensor hin bewirkbar ist. Durch die geeignete Materialwahl ist ein Schutz vor magnetischen Feldern und Schockwellen, also Körperschall, erreichbar.

Bei einer vorteilhaften Ausgestaltung ist der Radialabstandsbereich ein Teilbereich des von der Bremsspule überdeckten Radialabstandsbereichs. Von Vorteil ist dabei, dass die Erhebung radial im von der Bremsspule überdeckten Radialabstandsbereich angeordnet ist. Somit ist. Somit ist in diesem Bereich der Magnetkörper samt Bremsspule und zugehörigem Spulenträger sowie Vergussmasse axial vertieft ausführbar, so dass ein Luftraum zum Dämpfungsblech hin entsteht. Auf diese Weise ist eine Berührung des Dämpfungsblechs verhindert, so dass es ungestört aufliegt auf der axialen Erhebung der Ankerscheibe.

Bei einer vorteilhaften Ausgestaltung ist die Bremsspule und/oder ein Spulenträger der Bremsspule mittels Vergussmasse gehalten in dem Magnetkörper. Von Vorteil ist dabei, dass eine einfache Verbindungstechnik, insbesondere eine stoffschlüssige Verbindungstechnik, verwendbar ist.

Bei einer vorteilhaften Ausgestaltung drücken sich am Magnetkörper abstützende Federelemente auf die Ankerscheibe, insbesondere in axialer Richtung. Von Vorteil ist dabei, dass bei Nichtbestromung der Bremsspule, beispielsweise bei Stromausfall, die Bremse einfällt und ein Lüften verhindert ist. Somit ist die Sicherheit erhöht.

Bei einer vorteilhaften Ausgestaltung liegt das Dämpfungsblech auf der Erhebung auf und/oder berührt die Erhebung. Von Vorteil ist dabei, dass über die Auflagefläche die die Ankerscheibe abbremsende Kraft einleitbar ist, welche bei Berührung des Dämpfungsblechs durch den Magnetkörper mittels Verformung des Dämpfungsblechs erzeugbar ist.

Bei einer vorteilhaften Ausgestaltung ist zwischen Dämpfungsblech und Vergussmasse ein Luftraum. Von Vorteil ist dabei, dass die Berührung des Dämpfungsblechs durch den Magnetkörper in einem definierten Bereich erfolgt, also radial außerhalb des von der Erhebung überdeckten Radialabstandsbereichs.

Bei einer vorteilhaften Ausgestaltung drücken bei nicht bestromter Bremsspule die Federelemente die Ankerscheibe zum Belagträger hin, der somit auf eine Bremsfläche gedrückt wird,

insbesondere wobei die Bremsfläche auf einem Gehäuseteil und/oder Lagerschild angeordnet ist, das mit dem Magnetkörper verbunden ist,

insbesondere wobei die Welle im die Bremsfläche aufweisenden Teil gelagert ist mittels zumindest eines Lagers. Von Vorteil ist dabei, dass die Sicherheit erhöht ist, da ein Einfallen der Bremse bei Stromausfall oder dergleichen vorgesehen ist.

Bei einer vorteilhaften Ausgestaltung wird bei bestromter Bremsspule die Ankerscheibe entgegen der von den Federelementen erzeugten Federkraft zum Magnetkörper hin angezogen. Von Vorteil ist dabei, dass der Bremsbelagträger axialen Freiraum gewinnt und sich somit von der Bremsfläche wegbewegt.

Bei einer vorteilhaften Ausgestaltung ist die Bremsspule eine Ringspule, die in einer ringförmigen Ausnehmung des Magnetkörpers aufgenommen ist,

insbesondere wobei die Ringachse die Wellenachse ist. Von Vorteil ist dabei, dass eine einfache Herstellung ermöglicht ist, insbesondere indem der Magnetkörper topfartig ausgeführt ist, wobei ein mittig angeordneter Mittelschenkel am Topfboden mündet.

Bei einer vorteilhaften Ausgestaltung ragt der Magnetkörper radial außerhalb des von der Erhebung überdeckten Radialabstandsbereichs axial weiter zur Ankerscheibe hin hervor als in diesem Radialabstandsbereich oder radial weiter innen. Von Vorteil ist dabei, dass die Berührung des Dämpfungsblechs durch den Magnetkörper in definierter Weise erfolgt, also nur radial außerhalb des von der Erhebung überdeckten Radialabstandsbereichs.

Bei einer vorteilhaften Ausgestaltung ist das Dämpfungsblech aus Stahlblech gefertigt und/oder als Lochscheibe ausgeführt. Von Vorteil ist dabei, dass eine effektive Geräuschdämpfung erreichbar ist, ohne dass ein zu großer Luftspalt notwendig ist. Hierzu ist einerseits wichtig, dass das Stahlblech eine hohe Stabilität aufweist, und andererseits, dass das Stahlblech ferromagnetisch ist.

Bei einer vorteilhaften Ausgestaltung ist die Ankerscheibe aus einem ferromagnetischen Material, wie Stahl oder Eisen, ausgeführt und/oder der Magnetkörper ist aus Stahlguss ausgeführt. Von Vorteil ist dabei, dass mit einem geringen Spulenstrom ein schnelles Lüften ermöglicht ist, obwohl die Federelemente hohe Federkräfte bewirken.

Bei einer vorteilhaften Ausgestaltung weist der Belagträger eine Innenverzahnung auf, die mit einer mit der Welle verbundenen oder auf der Welle angeordneten Außenverzahnung im Eingriff steht, insbesondere wobei die Verzahnung sich axial erstreckt. Von Vorteil ist dabei, dass ein hohes Drehmoment übertragbar ist, wobei eine geringe Hertzsche Pressung auftritt. Vorzugswiese ist eine Evolventen-Verzahnung einsetzbar.

Wichtige Merkmale bei dem Elektromotor mit einer Bremsanordnung, insbesondere mit einer vorgenannten Bremsanordnung, sind, dass die Welle eine Rotorwelle des Elektromotors ist.

Von Vorteil ist dabei, dass der den Elektromotor mit Bremsanordnung umfassende Antrieb, beispielsweise umrichtergespeister Getriebemotor, geräuscharm und somit umweltschonend betreibbar ist.

Weitere Vorteile ergeben sich aus den Unteransprüchen.

Die Erfindung wird nun anhand von Abbildungen näher erläutert:
In der Figur 1 ist ein schematischer Querschnitt durch eine erfindungsgemäße Bremsanordnung eines Antriebs gezeigt.

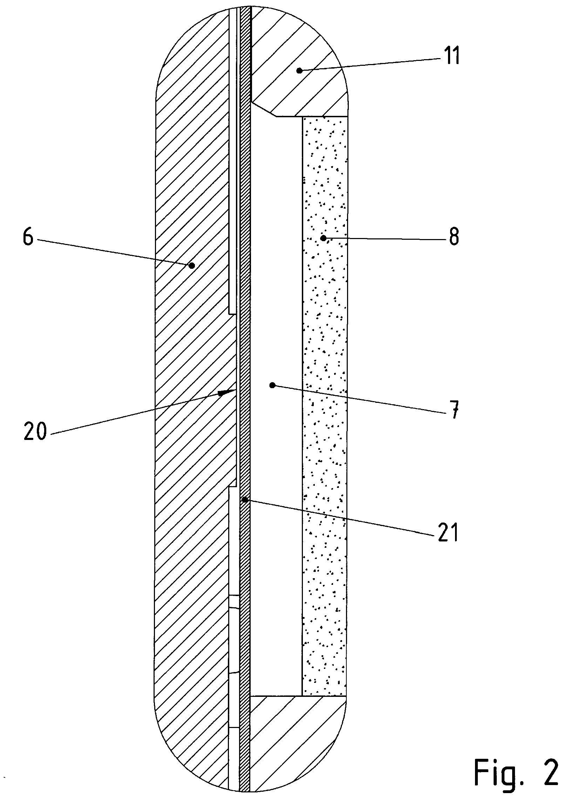

In der Figur 2 ist ein vergrößerter Ausschnitt gezeigt.

Wie in den Figuren gezeigt, ist die Welle 1 über ein im Lagerschild 3 eines Elektromotors aufgenommenes Lager 2 gelagert.

Die Welle 1 ist hierbei die Rotorwelle des Elektromotors und ist mit einer Verzahnung ausgeführt oder mit einem eine Verzahnung aufweisenden Verzahnteil drehfest verbunden, wobei die Verzahnung die eintreibende Verzahnung eines vom Motor angetriebenen Getriebes ist.

Das Lagerschild 3 ist mit dem Statorgehäuse und/oder weiteren Gehäuseteilen des Elektromotors verbunden.

Mit dem Lagerschild 3 ist an der vom Stator abgewandten axialen Seite des Lagerschildes 3 ein Magnetkörper 11, vorzugsweise aus Stahlguss, insbesondere GGG-Guss, verbunden, insbesondere schraubverbunden mit zwischengeordneten Abstandsbolzen. Der Magnetkörper 11 ist auch als Spulenkörper bezeichenbar.

Zusätzlich ist Dichtheit herstellbar mit einem zwischen Magnetkörper 11 und Lagerschild 3 zwischengeordneten, mit dem Lagerschild 3 und mit dem Magnetkörper 11 dicht verbundenen Gehäuseteil 5.

Am äußeren Umfang der Welle 1 beziehungsweise einem mit ihr drehfest verbundenen Ringteil 15 ist eine Verzahnung angebracht, deren Zähne in axialer Richtung sich erstrecken. Vorzugsweise ist die Verzahnung eine Evolventenverzahnung.

Ein Belagträger 4, der zumindest axial beidseitig, also zum Lagerschild 3 und auch zum Magnetkörper 11 hin gewandt, einen jeweiligen Bremsbelag aufweist oder aus einem Bremsbelag gefertigt ist, weist eine Innenverzahnung auf, mittels welcher der Belagträger 4 drehfest aber axial verschiebbar verbunden ist mit der Verzahnung der Welle 1 beziehungsweise des Ringteils 15.

Eine axial zwischen Belagträger 4 und Magnetkörper 11 angeordnete axial verschiebbar aber drehfest mit dem Magnetkörper verbundene Ankerscheibe 6 ist aus einem ferromagnetischen Material, wie Stahl oder dergleichen, ausgeführt.

Der Magnetkörper 11 weist eine ringförmige Ausnehmung auf, in die eine in einem Spulenträger 12 aus Kunststoff aufgenommene Ringspule, die auch als Bremsspule 10 bezeichnet wird, eingelegt ist. Der Magnetkörper weist also ein topfförmiges Aussehen auf, wobei ein mittig angeordneter Mittelschenkel am Magnetkörper 11 ausgebildet ist.

Bei Nicht-Bestromung der Bremsspule 10 drücken sich am Magnetkörper abstützende Federelemente 9 die Ankerscheibe 6 auf den Belagträger 4, der somit auf das Lagerschild 3 gedrückt wird. Die Berührfläche des entsprechenden Bremsbelagabschnitts des Belagträgers 4 mit dem Lagerschild 3 ist als Bremsfläche fein bearbeitet, insbesondere geschliffen.

Die Bremsspule 10 ist samt Spulenträger 12 in der ringförmigen Ausnehmung des Magnetkörpers 11 mittels Vergussmasse gehalten.

Bei Bestromung der Bremsspule 10 wird die Ankerscheibe 6 in Richtung zum Magnetkörper hin angezogen entgegen der Federkraft der Federelemente 9.

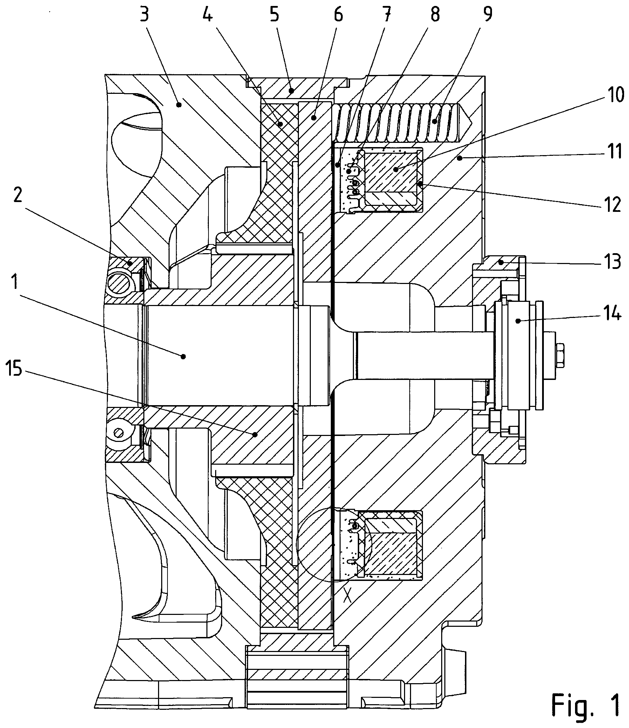

An der vom Lagerschild abgewandten Seite des Magnetkörpers 11 ist eine Adapterplatte 13 angeordnet, auf deren vom Magnetkörper 11 abgewandten axialen Seite ein Sensorgehäuse 14 eines Winkelsensors verbunden, insbesondere schraubverbunden. Mit der Welle 1 ist ein Sensorrotorteil des Winkelsensors drehfest verbunden, so dass die Winkelstellung des vom Sensorgehäuse 14 umgebenen Sensorrotorteils detektierbar ist. Dabei ist das Sensorgehäuse 14 in Figur 1 nicht angeschnitten dargestellt.

Die Adapterplatte 13 ist aus einem unmagnetischen und/oder diamagnetischem Material, wie beispielsweise Aluminium oder Kunststoff, gefertigt, so dass eine magnetische Entkopplung erreichbar ist zwischen Magnetkörper und Winkelsensor. Die Adapterplatte 13 weist eine erste Schnittstelle zur Verbindung mit dem Magnetkörper 11 auf und eine zweite Schnittstelle zur Verbindung mit Sensorgehäuse 14. Somit sind verschiedene Sensorgehäuse am gleichen Magnetkörper 11 verbindbar. Alternativ ist ein stets gleicher Winkelsensor mit verschiedenen Magnetkörpern 11 verbindbar, indem ein entsprechender jeweiliger Adapter dem jeweiligen Sensorgehäuse 14 zugeordnet wird, wobei diese Adapter zum Magnetkörper 11 hin stets dieselbe Schnittstelle aufweisen, zum Winkelsensor jedoch stets dieselbe Schnittstelle. Unter Schnittstelle wird hierbei die geometrische Anordnung von Stufen und/oder das Bohrbild von Bohrungen im Verbindungsbereich der jeweiligen Komponente verstanden.

Zum Schutz des Winkelsensors ist ein Dämpfungssystem mit einem Dämpfungsblech 21 vorgesehen. Dieses ist mit der Ankerscheibe 4 verbunden, insbesondere formschlüssig verbunden und/oder nietverbunden.

Das Dämpfungsblech 21 ist als ebenes Blechstück ausgeführt und weist Ausnehmungen für die durchgehenden Federelemente 9 auf.

Das Dämpfungsblech 21 liegt auf einem Kragen 20, also einer ringförmigen Erhebung, an der Ankerscheibe 6 auf. Diese Erhebung 20 ist zum Magnetkörper 11 hin zugewandt und innerhalb des von der Bremsspule 10 überdeckten Radialabstandsbereich angeordnet. Zur Vermeidung von Berührung ist zwischen dem Dämpfungsblech 21 und der Vergussmasse 8 ein Luftraum 7 angeordnet. Hierzu ist entsprechend wenig Vergussmasse 8 verwendet beim Eingießen in die ringförmige Ausnehmung des Magnetkörpers 11. Der Luftraum 7 überdeckt in radialer Richtung den von der Erhebung 20 überdeckten Bereich

Im an den von der Erhebung 20 überdeckten Radialabstandsbereich sich anschließenden, radial weiter außen liegenden Radialabstandsbereich ist das Dämpfungsblech 21 axial beabstandet zur Ankerscheibe 6.

Somit drückt der Magnetkörper bei eingefallener Bremse, also bei bestromter Bremsspule 10, auf das Dämpfungsblech 21. Da zwischen Vergussmasse 8 und Dämpfungsblech 21 jedoch der Luftraum 7 angeordnet ist, wird das Dämpfungsblech 21 auch bei eingefallener Bremse, also bei bestromter Bremsspule 10, nicht von Vergussmasse 8 oder vom Magnetkörper 11 berührt.

Somit wird die Energie der beim Bestromen der Bremsspule 10 beschleunigten Ankerscheibe 6 zumindest teilweise über das Dämpfungsblech 21 abgeführt und somit das entstehende Aufschlagsgeräusch gedämpft mittels der Verformung des Dämpfungsblechs 21.

Die axiale Ausdehnung der Erhebung 20 ist kleiner, insbesondere mindestens fünfmal kleiner, als die axiale Ausdehnung des Luftraums 7.

Die Erhebung 20 ist ringförmig ausgeführt. Sie ist einem umlaufenden Kragen ähnlich.

Das Dämpfungsblech 21 ist wiederum ebenso wie die Ankerscheibe ferromagnetisch.

Bei weiteren erfindungsgemäßen Ausführungsbeispielen ist das Ringteil 15 mit der Welle 3 einstückig ausgeführt.

### Bezugszeichenliste

1 Welle
2 Lager
3 Lagerschild
4 Bremsbelagträger
5 Gehäuseteil
6 Ankerscheibe
7 Luftraum
8 Vergussmasse
9 Federelement
10 Bremsspule
11 Magnetkörper
12 Spulenträger
13 Adapterplatte
14 Sensorgehäuse
20 Kragen, ringförmige Erhebung
21 Dämpfungsblech

## Patentansprüche

1. Elektromagnetisch betätigbare Bremsanordnung zum Abbremsen einer Welle, auf der ein Belagträger drehfest aber axial bewegbar angeordnet ist,
wobei eine Bremsspule (10) in einem Magnetkörper (11) aufgenommen ist, mit dem eine Ankerscheibe (6) drehfest verbunden ist, aber axial beweglich angeordnet ist,
**wobei** die Ankerscheibe (6) an ihrer dem Magnetkörper zugewandten Seite eine Erhebung aufweist,
wobei ein Dämpfungsblech (21) axial zwischen Ankerscheibe und Magnetkörper angeordnet ist,
wobei das Dämpfungsblech vom Magnetkörper außerhalb des von der Erhebung (20) überdeckten Radialabstandsbereichs verformbar ist und/oder berührbar ist, insbesondere vom Magnetkörper,
**dadurch gekennzeichnet, dass**
**Ankerscheibe und Dämpfungsblech lose axial nebeneinander angeordnet sind,**
**an der von der Ankerscheibe abgewandten axialen Seite des Magnetkörpers ein Winkelsensor angeordnet ist,**
**wobei der Winkelsensor ein Sensorgehäuse** (14) **aufweist, das direkt oder über eine Adapterplatte** (13) **mit dem Magnetkörper verbunden ist, und wobei vom Sensorgehäuse umgeben ein Sensorrotorteil angeordnet ist, das mit der Welle drehfest verbunden ist,**
**wobei die Adapterplatte aus einem amagnetischem, diamagnetischen oder paramagnetischem Werkstoff, insbesondere Aluminium oder Kunststoff, gefertigt ist.**

2. Bremsanordnung nach Anspruch 1,
**dadurch gekennzeichnet, dass**
**das Material der Adapterplatte eine größere Absorption für Körperschall mit einer Frequenz zwischen 1 Hz und 100 kHz aufweist als das Material des Magnetkörpers.**

3. Bremsanordnung nach mindestens einem der vorangegangenen Ansprüche,
**dadurch gekennzeichnet, dass**
Ankerscheibe (6) und Dämpfungsblech (21) jeweils drehfest aber axial bewegbar angeordnet sind mittels Führungselementen, die mit dem Magnetkörper verbunden, insbesondere schraubverbunden, sind, wobei die Führungselemente sowohl mit der Ankerscheibe als auch mit dem Dämpfungsblech in Umfangsrichtung formschlüssig verbunden sind, insbesondere wobei als Führungselemente Zylinderstifte verwendet sind.

4. Bremsanordnung nach mindestens einem der vorangegangenen Ansprüche,
**dadurch gekennzeichnet, dass**
der Radialabstandsbereich ein Teilbereich des von der Bremsspule überdeckten Radialabstandsbereichs ist.

5. Bremsanordnung nach mindestens einem der vorangegangenen Ansprüche,
**dadurch gekennzeichnet, dass**
die Bremsspule und/oder ein Spulenträger der Bremsspule mittels Vergussmasse gehalten ist in dem Magnetkörper.

6. Bremsanordnung nach mindestens einem der vorangegangenen Ansprüche,
**dadurch gekennzeichnet, dass**
sich am Magnetkörper abstützende Federelemente (9) auf die Ankerscheibe drücken, insbesondere in axialer Richtung.

7. Bremsanordnung nach mindestens einem der vorangegangenen Ansprüche,
**dadurch gekennzeichnet, dass**
das Dämpfungsblech auf der Erhebung aufliegt und/oder die Erhebung berührt,
und/oder dass
zwischen Dämpfungsblech und Vergussmasse ein Luftraum ist.

8. Bremsanordnung nach mindestens einem der vorangegangenen Ansprüche,
**dadurch gekennzeichnet, dass**
bei Nicht bestromter Bremsspule die Federelemente die Ankerscheibe zum Belagträger hin drücken, der somit auf eine Bremsfläche gedrückt wird,
insbesondere wobei die Bremsfläche auf einem Gehäuseteil und/oder Lagerschild angeordnet ist, das mit dem Magnetkörper verbunden ist,
insbesondere wobei die Welle im die Bremsfläche aufweisenden Teil gelagert ist mittels zumindest eines Lagers.

9. Bremsanordnung nach mindestens einem der vorangegangenen Ansprüche,
**dadurch gekennzeichnet, dass**
bei bestromter Bremsspule die Ankerscheibe entgegen der von den Federelementen erzeugten Federkraft zum Magnetkörper hin angezogen wird.

10. Bremsanordnung nach mindestens einem der vorangegangenen Ansprüche,
**dadurch gekennzeichnet, dass**
die Bremsspule eine Ringspule ist, die in einer ringförmigen Ausnehmung des Magnetkörpers aufgenommen ist,
insbesondere wobei die Ringachse die Wellenachse ist.

11. Bremsanordnung nach mindestens einem der vorangegangenen Ansprüche,
**dadurch gekennzeichnet, dass**
der Magnetkörper radial außerhalb des von der Erhebung überdeckten Radialabstandsbereichs axial weiter zur Ankerscheibe hin hervorragt als in diesem Radialabstandsbereich oder radial weiter innen.

12. Bremsanordnung nach mindestens einem der vorangegangenen Ansprüche,
**dadurch gekennzeichnet, dass**
das Dämpfungsblech aus Stahlblech gefertigt ist und/oder als Lochscheibe ausgeführt ist.

13. Bremsanordnung nach mindestens einem der vorangegangenen Ansprüche,
**dadurch gekennzeichnet, dass**
die Ankerscheibe aus einem ferromagnetischen Material, wie Stahl oder Eisen, ausgeführt ist und/oder dass der Magnetkörper aus Stahlguss ausgeführt ist.

14. Bremsanordnung nach mindestens einem der vorangegangenen Ansprüche,
**dadurch gekennzeichnet, dass**
der Belagträger eine Innenverzahnung aufweist, die mit einer mit der Welle verbundenen oder auf der Welle angeordneten Außenverzahnung im Eingriff steht, insbesondere wobei die Verzahnung sich axial erstreckt.

15. Elektromotor mit einer Bremsanordnung nach mindestens einem der vorangegangenen Ansprüche,
**dadurch gekennzeichnet, dass**
die Welle eine Rotorwelle des Elektromotors ist.

## Claims

1. An electromagnetically actuatable braking arrangement for braking a shaft on which a lining carrier is arranged non-rotatably but axially movably,
wherein a brake coil (10) is accommodated in a magnet body (11) to which an armature disc (6) is non-rotatably connected, but is arranged axially movably,
wherein the armature disc (6) has an elevation on its side facing the magnet body,
wherein a damping plate (21) is arranged axially between the armature disc and magnet body,
wherein the damping plate outside the radial clearance region covered by the elevation (20) can be deformed and/or contacted by the magnet body,
in particular by the magnet body,
**characterised in that**
the armature disc and damping plate are arranged loosely axially next to one another,
an angle sensor is arranged on the axial side of the magnet body remote from the armature disc,
wherein the angle sensor has a sensor housing (14) which is connected to the magnet body directly or by means of an adapter plate (13), and wherein a sensor rotor part is arranged, surrounded by the sensor housing, which is connected non-rotatably to the shaft,
wherein the adapter plate is manufactured from an amagnetic, diamagnetic or paramagnetic material, in particular aluminium or plastics material.

2. A braking arrangement according to Claim 1,
**characterised in that**
the material of the adapter plate has a greater absorption for structure-borne noise with a frequency of between 1 Hz and 100 kHz than the material of the magnet body.

3. A braking arrangement according to at least one of the preceding claims,
**characterised in that**
the armature disc (6) and damping plate (21) are in each case arranged non-rotatably but axially movably
by means of guide elements which are connected, in particular screw-connected, to the magnet body,
wherein the guide elements are connected in positive manner in the peripheral direction both to the armature disc and to the damping plate,
in particular wherein cylindrical pins are used as guide elements.

4. A braking arrangement according to at least one of the preceding claims,
**characterised in that**
the radial clearance region is a partial region of the radial clearance region covered by the brake coil.

5. A braking arrangement according to at least one of the preceding claims,
**characterised in that**
the brake coil and/or a coil holder of the brake coil is held in the magnet body by means of potting compound.

6. A braking arrangement according to at least one of the preceding claims,
**characterised in that**
spring elements (9) supported on the magnet body press on the armature disc,
in particular in the axial direction.

7. A braking arrangement according to at least one of the preceding claims,
**characterised in that**
the damping plate lies on the elevation and/or contacts the elevation,
and/or **in that**
there is an air space between the damping plate and potting compound.

8. A braking arrangement according to at least one of the preceding claims,
**characterised in that**
when the brake coil is non-energised the spring elements press the armature disc towards the lining carrier, which is thus pressed onto a braking surface,
in particular wherein the braking surface is arranged on a housing part and/or bearing bracket which is connected to the magnet body,
in particular wherein the shaft is mounted in the part having the braking surface by means of at least one bearing.

9. A braking arrangement according to at least one of the preceding claims,
**characterised in that**
when the brake coil is energised the armature disc is attracted towards the magnet body counter to the spring force generated by the spring elements.

10. A braking arrangement according to at least one of the preceding claims,
**characterised in that**
the brake coil is a toroidal coil which is accommodated in an annular cutout in the magnet body,
in particular wherein the axis of the toroid is the shaft axis.

11. A braking arrangement according to at least one of the preceding claims,
**characterised in that**
the magnet body radially outside the radial clearance region covered by the elevation projects axially further towards the armature disc than in this radial clearance region or radially further to the inside.

12. A braking arrangement according to at least one of the preceding claims,
**characterised in that**
the damping plate is manufactured from steel sheet and/or is embodied as a perforated disc.

13. A braking arrangement according to at least one of the preceding claims,
**characterised in that**
the armature disc is formed from a ferromagnetic material, such as steel or iron, and/or in that the magnet body is formed from cast steel.

14. A braking arrangement according to at least one of the preceding claims,
**characterised in that**
the lining carrier has internal toothing which is engaged with external toothing connected to the shaft or arranged on the shaft, in particular wherein the toothing extends axially.

15. An electric motor having a braking arrangement according to at least one of the preceding claims,
**characterised in that**
the shaft is a rotor shaft of the electric motor.

## Revendications

1. Ensemble de freinage actionnable électromagnétiquement, dévolu au freinage d'un arbre sur lequel un support de garniture est implanté avec verrouillage rotatif, mais avec mobilité axiale,
une bobine de freinage (10) étant logée dans un corps magnétique (11) auquel un disque d'induit (6) est relié avec verrouillage rotatif, mais est agencé avec mobilité axiale,
ledit disque d'induit (6) étant muni d'une protubérance sur son côté tourné vers ledit corps magnétique,
une tôle d'amortissement (21) étant interposée axialement entre ledit disque d'induit et ledit corps magnétique,
laquelle tôle d'amortissement peut être déformée par le corps magnétique à l'extérieur de la zone d'espacement radial couverte par la protubérance (20)
et/ou peut, en particulier, être exposée au contact dudit corps magnétique,
**caractérisé par le fait que**
le disque d'induit et la tôle d'amortissement sont agencés en juxtaposition, avec jeu dans le sens axial,
un capteur angulaire étant disposé du côté axial du corps magnétique qui pointe à l'opposé dudit disque d'induit,
sachant que ledit capteur angulaire est doté d'un boîtier (14) relié audit corps magnétique, directement ou par l'intermédiaire d'une platine d'adaptation (13), et sachant qu'une partie rotorique détectrice, entourée par ledit boîtier du capteur, est reliée à l'arbre avec verrouillage rotatif,
ladite platine d'adaptation étant fabriquée en un matériau amagnétique, diamagnétique ou paramagnétique, notamment en aluminium ou en matière plastique.

2. Ensemble de freinage selon la revendication 1,
**caractérisé par le fait que**
le matériau de la platine d'adaptation présente, comparativement au matériau du corps magnétique, une plus grande absorption de bruits de structure ayant une fréquence comprise entre 1 Hz et 100 kHz.

3. Ensemble de freinage selon au moins l'une des revendications précédentes,
**caractérisé par le fait que**
le disque d'induit (6) et la tôle d'amortissement (21) sont respectivement implantés avec verrouillage rotatif, mais avec mobilité axiale,
au moyen d'éléments de guidage reliés au corps magnétique, en particulier par vissage, lesquels éléments de guidage sont reliés tant audit disque d'induit qu'à ladite tôle d'amortissement, par complémentarité de formes dans le sens périphérique,
sachant notamment que des broches cylindriques sont utilisées en tant qu'éléments de guidage.

4. Ensemble de freinage selon au moins l'une des revendications précédentes,
**caractérisé par le fait que**
la zone d'espacement radial est une région partielle de la zone d'espacement radial couverte par la bobine de freinage.

5. Ensemble de freinage selon au moins l'une des revendications précédentes,
**caractérisé par le fait que**
la bobine de freinage, et/ou un support de ladite bobine de freinage, est retenu(e) dans le corps magnétique au moyen d'une masse de scellement.

6. Ensemble de freinage selon au moins l'une des revendications précédentes,
**caractérisé par le fait que**
des éléments élastiques (9) prenant appui sur le corps magnétique exercent une pression sur le disque d'induit,
en particulier dans le sens axial.

7. Ensemble de freinage selon au moins l'une des revendications précédentes,
**caractérisé par le fait que**
la tôle d'amortissement repose sur la protubérance, et/ou est en contact avec ladite protubérance ;
et/ou **par le fait**
**qu'**un espace interstitiel est réservé entre ladite tôle d'amortissement et la masse de scellement.

8. Ensemble de freinage selon au moins l'une des revendications précédentes,
**caractérisé par le fait que**,
lorsque la bobine de freinage n'est pas alimentée en courant, les éléments élastiques exercent une pression sur le disque d'induit en direction du support de garniture, lequel est ainsi pressé vers une surface de freinage,
sachant, en particulier, que ladite surface de freinage est située sur une partie de boîtier et/ou sur un bouclier de palier, relié(e) au corps magnétique,
l'arbre étant notamment monté, à l'aide d'au moins un palier, dans la partie munie de ladite surface de freinage.

9. Ensemble de freinage selon au moins l'une des revendications précédentes,
**caractérisé par le fait que**,
lorsque la bobine de freinage est alimentée en courant, le disque d'induit est attiré en direction du corps magnétique en opposition à la force élastique engendrée par les éléments élastiques.

10. Ensemble de freinage selon au moins l'une des revendications précédentes,
**caractérisé par le fait que**
la bobine de freinage est une bobine en forme d'anneau, logée dans un évidement annulaire du corps magnétique,
sachant notamment que l'axe de l'anneau est l'axe de l'arbre.

11. Ensemble de freinage selon au moins l'une des revendications précédentes,
**caractérisé par le fait que**
le corps magnétique fait radialement saillie à l'extérieur de la zone d'espacement radial couverte par la protubérance, axialement d'une plus grande distance en direction du disque d'induit, que dans cette zone d'espacement radial, ou d'une plus grande distance vers l'intérieur dans le sens radial.

12. Ensemble de freinage selon au moins l'une des revendications précédentes,
**caractérisé par le fait que**
la tôle d'amortissement est fabriquée en tôle d'acier et/ou est conçue sous la forme d'un disque perforé.

13. Ensemble de freinage selon au moins l'une des revendications précédentes,
**caractérisé par le fait que**
le disque d'induit est réalisé en un matériau ferromagnétique, tel que de l'acier ou du fer ; et/ou **par le fait que** le corps magnétique est réalisé en acier coulé.

14. Ensemble de freinage selon au moins l'une des revendications précédentes,
**caractérisé par le fait que**
le support de garniture est pourvu d'une denture intérieure en prise avec une denture extérieure reliée à l'arbre, ou située sur ledit arbre, laquelle denture s'étend notamment dans le sens axial.

15. Moteur électrique équipé d'un ensemble de freinage conforme à au moins l'une des revendications précédentes,
**caractérisé par le fait que**
l'arbre est un arbre rotorique dudit moteur électrique.
